# EUROPEAN PATENT APPLICATION

(11) **EP 4 535 751 A1**
(43) Date of publication of application: **09.04.2025**
(21) Application number: 23829507.5
(22) Date of filing: 17.03.2023
(51) Int. Cl.: H04L 45/24

(54) **NETWORK ELEMENT SWITCHING METHOD AND APPARATUS, MULTI-CHASSIS LINK AGGREGATION GROUP, AND STORAGE MEDIUM**

(30) Priority: 29.06.2022 CN 202210750917
(71) Applicant: ZTE CORPORATION, Shenzhen, Guangdong 518057 (CN)
(72) Inventor: LIN, Ning, Shenzhen, Guangdong 518057 (CN)
(74) Representative: Chimini, Francesco
(86) International application number: PCT/CN2023/082293
(87) International publication number: WO 2024/001315

(57) **Abstract**

Embodiments of the present disclosure relate to the field of communications, and provide a network element switching method and apparatus, a multi-chassis link aggregation group, and a storage medium. The method comprises: when a data packet sent by a server is obtained, obtaining a target packet parameter, according to the target packet parameter and the data packet, determining whether the server is in an active/standby election completion state; and when it is determined that the server is not in the active/standby election completion state, controlling a constituent network element of a multi-chassis link aggregation group not to perform active-standby switching.

## Description

### Cross-Reference to Related Application

The present disclosure is based on Chinese Patent Application No. CN 202210750917.8 filed on June 29, 2022 and entitled "Network Element Switching Method and Apparatus, Multi-chassis Link Aggregation Group and Storage Medium", and claims priority to this patent application, the disclosure of which is incorporated herein by reference in its entirety.

### Technical Field

The present disclosure relates to the field of communication technologies, and in particular, to a network element switching method and apparatus, a multi-chassis link aggregation group and a storage medium.

### Background

A multi-chassis mink aggregation group, M-LAG, is a mechanism for implementing multi-chassis link aggregation, which can implement link aggregation between multiple chassis, thereby improving link reliability from a single board level to a chassis level, and forming an active-active system. At present, a common communication method for active-active systems is: two network devices are respectively connected to two ports of a server by using a set of link aggregation groups, such that the network devices can determine main and standby ports of the server according to port traffic of the server. However, when the server is in a Bond1 mode, the server is required to determine the main and standby ports, and before the server determines the main and standby ports, if the two ports of the server send traffic to a network device side, the network device side continuously performs main/standby switching, and the server may fail to connect to the network devices, seriously affecting the stability and reliability of a network.

### Summary

Embodiments of the present disclosure provide a network element switching method and apparatus, a multi-chassis link aggregation group and a storage medium, aiming to improve the stability and reliability of a network.

First aspect, some embodiments of the present disclosure provide a network element switching method, comprising: when a data message sent by a server is acquired, target message parameters are acquired, wherein the target message parameters are message parameters used for determining whether the server is in a main/standby election completion state; whether the server is in a main/standby election completion state is determined according to the target message parameters and the data message; and when it is determined that the server is not in the main/standby election completion state, constituent network elements of a multi-chassis link aggregation group is controlled not to perform main/standby switching.

Second aspect, some embodiments of the present disclosure further provide a network element switching apparatus. The network element switching apparatus comprises a processor, a memory, a computer program stored on the memory and executable by the processor, and a data bus for implementing connection and communication between the processor and the memory, wherein the computer program, when executed by the processor, implements any network element switching method provided in the description of the present disclosure.

Third aspect, some embodiments of the present disclosure further provide a multi-chassis link aggregation group. The multi-chassis link aggregation group comprises a plurality of constituent network elements and a plurality of member ports, and each of the constituent network elements comprises the network element switching apparatus according to the second aspect.

Fourth aspect, some embodiments of the present disclosure further provide a storage medium for computer-readable storage. The storage medium stores one or more programs which can be executed by one or more processors to implement any network element switching method provided in the description of the present disclosure.

### Brief Description of the Drawings

In order to describe the technical solutions of the embodiments of the present disclosure more clearly, hereinafter, accompanying drawings requiring to be used for describing the embodiments are introduced briefly. Apparently, the accompanying drawings in the following description relate to some embodiments of the present disclosure, and for a person of ordinary skill in the art, other accompanying drawings can also be obtained according to these accompanying drawings without involving any inventive effort.
Fig. 1 is a schematic diagram of a scenario for implementing a network element switching method provided by embodiments of the present disclosure;
Fig. 2 is a schematic flowchart of a network element switching method provided by embodiments of the present disclosure;
Fig. 3 is a schematic flowchart of a sub-step of the network element switching method in Fig. 2;
Fig. 4 is a schematic flowchart of another sub-step of the network element switching method in Fig. 2;
Fig. 5 is a schematic flowchart of still another sub-step of the network element switching method in Fig. 2; and
Fig. 6 is a schematic structural block diagram of a network element switching apparatus provided by embodiments of the present disclosure.

### Detailed Description of the Embodiments

Hereinafter, the technical solutions in the embodiments of the present disclosure will be described clearly and completely with reference to the accompanying drawings of the embodiments of the present disclosure. Apparently, the embodiments as described are some of the embodiments of the present disclosure, and are not all of the embodiments. All other embodiments obtained by a person of ordinary skill in the art on the basis of the embodiments of the present disclosure without involving any inventive effort all fall within the scope of protection of the present disclosure.

The flowcharts shown in the accompanying drawings are only illustrative, do not necessarily comprise all the content and operations/steps, nor do they have to be executed in the described order. For example, some operations/steps may be broken down, combined, or partially combined, and therefore the actual execution order may vary according to actual situations.

It should be understood that the terms used in the description of the present disclosure are for the purpose of describing particular embodiments only and are not intended to limit the present disclosure. As used in the description and the appended claims of the present disclosure, the singular forms "a", "an" and "the" are intended to comprise plural forms as well, unless the context clearly indicates exceptions.

Hereinafter, some embodiments of the present disclosure will be described in detail with reference to the accompanying drawings. The following embodiments and features in the embodiments may be combined with one another without conflicts.

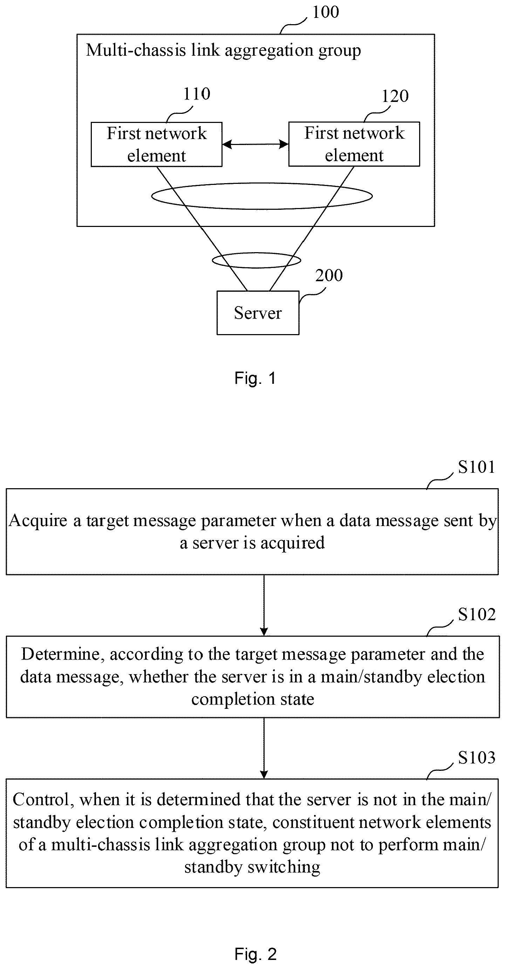

Refer to Fig. 1, Fig. 1 is a schematic diagram of a scenario for implementing a network element switching method provided by embodiments of the present disclosure.

As shown in Fig. 1, a multi-chassis link aggregation group 100 is in communication connection with a server 200. A first network element 110 and a second network element 120, as constituent network elements, constitute the multi-chassis link aggregation group 100. The first network element 110 and the second network element 120 may be routers or switches, and the switches may be layer2 switches or layer3 switches. It can be understood that, in addition to the first network element 110 and the second network element 120, the multi-chassis link aggregation group 100 may further comprise other constituent network elements, which is not specifically limited in the embodiments of the present disclosure.

In the embodiments of the present disclosure, the multi-chassis link aggregation group may refer to a link aggregation technology that can implement the following functions: performing link aggregation on ports of the first network element 110 and ports of the second network element 120, so that all or some of the ports of the first network element 110 and the second network element 120 are aggregated to form member ports, and the whole formed by the first network element 110 and the second network element 120 can be logically embodied as one device, forming an active-active system. From the perspective of the server 200, the multi-chassis link aggregation group is equivalent to one device. Wherein data messages sent by the server 200 to the multi-chassis link aggregation group 100 are distributed to the first network element 101 or the second network element 102 in a load-balancing manner.

In some embodiments, when the server 200 is in a Bond1 mode and the server 200 is not in a main/standby election completion state, a first data message is generated; and when the server 200 is in the Bond1 mode and the server 200 is in the main/standby election completion state, a second data message is generated. The first data message or the second data message is sent to the multi-chassis link aggregation group 100. When the data message sent by the server 200 is received, the multi-chassis link aggregation group 100 determines, according to target message parameter(s) and the received data message, whether the server 200 is in the main/standby election completion state. When it is determined that the server 200 is not in the main/standby election completion state, constituent network elements of the multi-chassis link aggregation group do not perform main/standby switching, the received data message comprising the first data message or the second data message.

Wherein the server 200 may be a standalone physical server or a server cluster composed of a plurality of servers, or may also be a cloud server providing infrastructure cloud computing services such as cloud services, cloud databases, cloud computing, cloud functions, cloud storage, network services, cloud communications, middleware services, domain name services, security services, content delivery networks, CDNs, as well as big data and artificial intelligence platforms.

Hereinafter, the network element switching method provided in the embodiments of the present disclosure will be described in detail with reference to the scenario in Fig. 1. It should be noted that the scenario in Fig. 1 is only used to explain the network element switching method provided in the embodiments of the present disclosure, and does not constitute a limitation to the application scenarios of the network element switching method provided in the embodiments of the present disclosure.

Refer to Fig. 2, Fig. 2 is a schematic flowchart of a network element switching method provided by embodiments of the present disclosure. The network element switching method can be applied to each constituent network element of a multi-chassis link aggregation group, so as to improve the stability and reliability of a network.

As shown in Fig. 2, the network element switching method comprises steps S101 to S103.

Step S101: when a data message sent by a server is acquired, a target message parameter is acquired.

The target message parameter(s) is/are the message parameter(s) used for determining whether the server is in a main/standby election completion state. The target message parameter(s) may comprise media access control address, MAC address, information, virtual local area network, VLAN, tag information and/or message priority field information of the server. The MAC address information comprises a first MAC address and a second MAC address of the server. The VLAN tag information comprises a first VLAN tag and a second VLAN tag. The message priority field information comprises a first message priority field and a second message priority field. The target message parameter(s) may be configured by a user for a multi-chassis link aggregation group.

In some embodiments, a message parameter configuration instruction is acquired, the message parameter configuration instruction comprising MAC address information, VLAN tag information and/or message priority field information; and the MAC address information, the VLAN tag information and/or the message priority field information are configured as the target message parameter(s). By configuring, in the multi-chassis link aggregation group, the message parameter(s) for determining whether the server is in a main/standby election completion state, the multi-chassis link aggregation group can quickly and accurately determine the state of a service area.

Wherein, the message parameter configuration instruction may be manually triggered by a user. For example, a terminal device displays a message parameter configuration page, and acquires the message parameter(s) input or selected by the user in the message parameter configuration page; and in response to a trigger operation of the user on a configuration confirmation icon in the message parameter configuration page, generates a message parameter configuration instruction on the basis of the message parameter(s) input or selected by the user in the message parameter configuration page, and sends the message parameter configuration instruction to a multi-chassis link aggregation group.

Exemplarily, the MAC address information comprises a first MAC address and a second MAC address of the server. The first MAC address is the initial MAC address within an MAC address range of the server, and the second MAC address is any MAC address following the initial MAC address within the MAC address range. Alternatively, the second MAC address is the initial MAC address within the MAC address range of the server, and the first MAC address is any MAC address following the first MAC address within the MAC address range. Wherein any MAC address within the MAC address range of the server may uniquely identify the server.

For example, if the MAC address range of the server is 00:11:22:33:44:55 to 00:11:22:33:44:56, the first MAC address may be 00:11:22:33:44:55, and the second MAC address may be 00:11:22:33:44:56; alternatively, the second MAC address may be 00:11:22:33:44:55, and the first MAC address may be 00:11:22:33:44:56. For another example, if the MAC address range is 00:11:22:33:44:55 to 00:11:22:33:44:59, the first MAC address may be 00:11:22:33:44:55, and the second MAC address may be any one of 00:11:22:33:44:56, 00:11:22:33:44:57, 00:11:22:33:44:58 and 00:11:22:33:44:59.

In some embodiments, the VLAN tag information is configured for each member port in the multi-chassis link aggregation group, and/or an access control list, ACL, rule corresponding to the message priority field information is configured for each member port in the multi-chassis link aggregation group. By configuring the VLAN tag information for each member port in the multi-chassis link aggregation group, each constituent network element in the multi-chassis link aggregation group can determine, on the basis of a VLAN tag carried in the data message sent by the server, whether the server is in a main/standby election completion state; and by configuring, for each member port in the multi-chassis link aggregation group, the ACL rule corresponding to the message priority field information, each member port in the multi-chassis link aggregation group can match, on the basis of the configured ACL rule, data messages sent by the server before and after main/standby election is completed, thereby accurately determining whether the server is in a main/standby election completion state.

Exemplarily, when the message parameter configuration instruction comprises VLAN tag information, the VLAN tag information is configured for each member port in the multi-chassis link aggregation group; alternatively, when the message parameter configuration instruction comprises message priority field information, an ACL rule corresponding to the message priority field information is configured for each member port in the multi-chassis link aggregation group; alternatively, when the message parameter configuration instruction comprises VLAN tag information and message priority field information, the VLAN tag information is configured for each member port in the multi-chassis link aggregation group, and an ACL rule corresponding to the message priority field information is configured for each member port in the multi-chassis link aggregation group.

In some embodiments, when the server is in a Bond1 mode and the server is not in a main/standby election completion state, the server generates a first data message, and when the server is in the Bond1 mode and the server is in the main/standby election completion state, the server generates a second data message; and the server sends the first data message or the second data message to the multi-chassis link aggregation group. Wherein, when the server enters the Bond1 mode, the server performs main/standby election on two ports (which may also be two network cards) of the server on the basis of a main/standby election algorithm, so as to determine a main port and a standby port in the two ports. The main/standby election on the two ports takes a period of time, and thus the server comprises a stage before the main/standby election is completed and a stage after the main/standby election is completed. Before the main/standby election is completed, the server is not in the main/standby election completion state, and after the main/standby election is completed, the server is in the main/standby election completion state.

Exemplarily, a first message parameter carried in the first data message is different from a second message parameter carried in the second data message. The first message parameter is used for identifying that the server is not in the main/standby election completion state, and the second message parameter is used for identifying that the server is in the main/standby election completion state. The first message parameter may comprise a first MAC address, a first VLAN tag or a first message priority field, and the second message parameter may comprise a second MAC address, a second VLAN tag and a second message priority field.

Step S102: whether the server is in a main/standby election completion state is determined according to the target message parameter and the data message.

The target message parameter(s) may comprise MAC address information, VLAN tag information and/or message priority field information of the server. The MAC address information comprises a first MAC address and a second MAC address of the server. The VLAN tag information comprises a first VLAN tag and a second VLAN tag. The message priority field information comprises a first message priority field and a second message priority field.

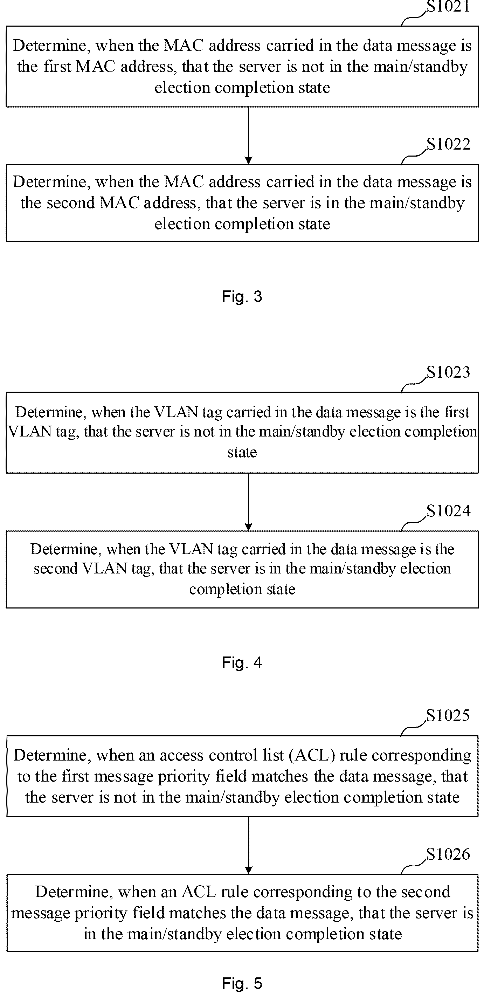

In some embodiments, as shown in Fig. 3, step S102 comprises: sub-steps S1021 to S1022.

Sub-step S1021: when the MAC address carried in the data message is the first MAC address, it is determined that the server is not in the main/standby election completion state.

Sub-step S1022: when the MAC address carried in the data message is the second MAC address, it is determined that the server is in the main/standby election completion state.

For example, when the server is in the Bond1 mode and the server is not in the main/standby election completion state, the server sends the data message to the multi-chassis link aggregation group by using the first MAC address 00:11:22:33:44:55; and when the server is in the Bond1 mode and the server is in the main/standby election completion state, the server sends the data message to the multi-chassis link aggregation group by using the second MAC address 00:11:22:33:44:56. After the multi-chassis link aggregation group receives the data message sent by the server, in cases where the MAC address carried in the data message sent by the server is 00:11:22:33:44:55, it can be determined that the server is not in the main/standby election completion state; and in cases where the MAC address carried in the data message sent by the server is 00:11:22:33:44:56, it can be determined that the server is in the main/standby election completion state.

For another example, when the server is in the Bond1 mode and the server is not in the main/standby election completion state, the server sends the data message to the multi-chassis link aggregation group by using the first MAC address 00:11:22:33:44:56; and when the server is in the Bond1 mode and the server is in the main/standby election completion state, the server sends the data message to the multi-chassis link aggregation group by using the second MAC address 00:11:22:33:44:55. After the multi-chassis link aggregation group receives the data message sent by the server, in cases where the MAC address carried in the data message sent by the server is 00:11:22:33:44:56, it can be determined that the server is not in the main/standby election completion state; and in cases where the MAC address carried in the data message sent by the server is 00:11:22:33:44:55, it can be determined that the server is in the main/standby election completion state.

In some embodiments, as shown in Fig. 4, step S102 comprises: sub-steps S1023 to S1024.

Sub-step S1023: when the VLAN tag carried in the data message is the first VLAN tag, it is determined that the server is not in the main/standby election completion status.

Sub-step S1024: when the VLAN tag carried in the data message is the second VLAN tag, it is determined that the server is in the main/standby election completion state.

For example, when the server is in the Bond1 mode and the server is not in the main/standby election completion state, the server sends the data message to the multi-chassis link aggregation group by using the first VLAN tag VLAN100; and when the server is in the Bond1 mode and the server is in the main/standby election completion state, the server sends the data message to the multi-chassis link aggregation group by using the second VLAN tag VLAN200. After the multi-chassis link aggregation group receives the data message sent by the server, in cases where the VLAN tag carried in the data message sent by the server is VLAN100, it can be determined that the server is not in the main/standby election completion state; and in cases where the VLAN tag carried in the data message sent by the server is VLAN200, it can be determined that the server is in the main/standby election completion state.

For another example, when the server is in the Bond1 mode and the server is not in the main/standby election completion state, the server sends the data message to the multi-chassis link aggregation group by using the first VLAN tag VLAN200; and when the server is in the Bond1 mode and the server is in the main/standby election completion state, the server sends the data message to the multi-chassis link aggregation group by using the second VLAN tag VLAN100. After the multi-chassis link aggregation group receives the data message sent by the server, in cases where the VLAN tag carried in the data message sent by the server is VLAN200, it can be determined that the server is not in the main/standby election completion state; and in cases where the VLAN tag carried in the data message sent by the server is VLAN100, it can be determined that the server is in the main/standby election completion state.

In some embodiments, as shown in Fig. 5, step S102 comprises: sub-steps S1025 to S1026.

Sub-step S1025: when an access control list, ACL, rule corresponding to the first message priority field matches the data message, it is determined that the server is not in the main/standby election completion state.

Sub-step S1026: when an ACL rule corresponding to the second message priority field matches the data message, it is determined that the server is in the main/standby election completion state.

Wherein, each member port of the multi-chassis link aggregation group is configured with a first ACL rule for matching a data message that carries the first message priority field and a second ACL rule for matching a data message that carries the second message priority field. When the first ACL rule matches the data message, it can be determined that the server is not in the main/standby election completion state; and when the second ACL rule matches the data message, it can be determined that the server is in the main/standby election completion state.

For example, when the server is in the Bond1 mode and the server is not in the main/standby election completion state, the server sends the data message to the multi-chassis link aggregation group by using the first message priority field "1"; and when the server is in the Bond1 mode and the server is in the main/standby election completion state, the server sends the data message to the multi-chassis link aggregation group by using the second message priority field "2". After the server sends the data message to the multi-chassis link aggregation group, in cases where an ACL rule corresponding to the first message priority field "1" matches the data message sent by the server, it can be determined that the server is not in the main/standby election completion state; and in cases where an ACL rule corresponding to the second message priority field "2" matches the data message sent by the server, it can be determined that the server is in the main/standby election completion state.

Step S103: when it is determined that the server is not in the main/standby election completion state, constituent network elements of a multi-chassis link aggregation group is controlled not to perform main/standby switching.

Wherein, when it is determined that the server is not in the main/standby election completion state, no matter whether the data message sent by the server is received by a main network element or a standby network element in the multi-chassis link aggregation group, the constituent network elements of the multi-chassis link aggregation group do not perform main/standby switching. For example, the first network element 110 is the main network element, and the second network element 120 is the standby network element. In cases where the first network element 110 receives the data message sent by the server 200 and the server 200 is not in the main/standby election completion state, the first network element 110 does not perform main/standby switching. Likewise, in cases where the second network element 120 receives the data message sent by the server 200 and the server 200 is not in the main/standby election completion state, the second network element 120 does not perform main/standby switching.

In some embodiments, when it is determined that the server is in the main/standby election completion state and a network element that acquires the data message is a standby network element, the multi-chassis link aggregation group is controlled to perform main/standby switching; and when it is determined that the server is in the main/standby election completion state and a network element that acquires the data message is a main network element, the multi-chassis link aggregation group is controlled not to perform main/standby switching. For example, as shown in Fig. 1, the first network element 110 is the main network element, and the second network element 120 is the standby network element. In cases where the first network element 110 receives the data message sent by the server 200 and the server 200 is in the main/standby election completion state, the first network element 110 does not perform main/standby switching. On the contrary, in cases where the second network element 120 receives the data message sent by the server 200 and the server 200 is in the main/standby election completion state, the second network element 120 performs main/standby switching; and after the second network element 120 performs main/standby switching, the second network element 120 becomes the main network element, and the first network element 110 becomes the standby network element.

According to the network element switching method provided in the embodiments, when a data message sent by a server is acquired, whether the server is in a main/standby election completion state is determined on the basis of a target message parameter and the acquired data message, so that when the server is not in the main/standby election completion state, main/standby switching is not performed between constituent network elements of a multi-chassis link aggregation group. In this way, continuous main/standby switching between the constituent network elements of the multi-chassis link aggregation group can be avoided, thereby reducing packet loss caused by abnormal switching between the constituent network elements of the multi-chassis link aggregation group, and greatly improving the stability and reliability of a network.

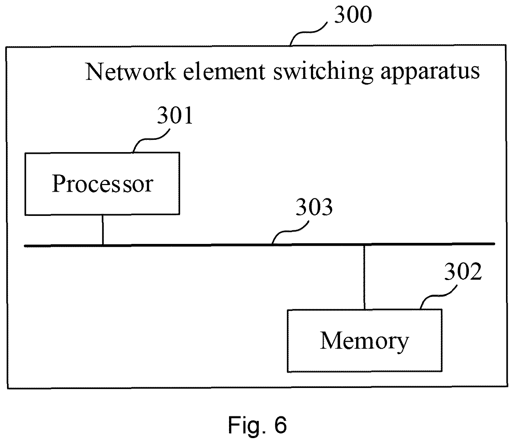

Refer to Fig. 6, Fig. 6 is a schematic structural block diagram of a network element switching apparatus provided by embodiments of the present disclosure.

As shown in Fig. 6, the network element switching apparatus 300 comprises a processor 301 and a memory 302. The processor 301 and the memory 302 are connected through a bus 303, and the bus is, for example, an Inter-integrated Circuit, I2C, bus.

Specifically, the processor 301 is configured to provide computing and control capabilities, and supporting operation of the entire network element switching apparatus. The processor 301 may be a central processing unit, CPU, and the processor 301 may also be another general-purpose processor, digital signal processor, DSP, application specific integrated circuit, ASIC, field-programmable gate array, FPGA, or another programmable logic device, discrete gate or transistor logic device, discrete hardware component, or the like. The general-purpose processor may be a microprocessor; alternatively, the processor may also be any conventional processor, and the like.

Specifically, the memory 302 may be a Flash chip, a read-only memory, ROM, disk, an optical disk, a USB flash drive, a mobile hard disk, or the like.

A person skilled in the art would understand that the structure shown in Fig. 6 is only a block diagram of a partial structure related to the solutions of the embodiments of the present disclosure, and does not constitute a limitation to the network element switching apparatus to which the solutions of the embodiments of the present disclosure are applied. A specific network element switching apparatus 300 may comprise more or fewer components than those shown in the figure, or combine some components, or have different component arrangements.

The processor 301 is configured to execute a computer program stored in the memory 302, and implementing, when executing the computer program, any network element switching method provided by the embodiments of the present disclosure.

In some embodiments, the processor 301 is configured to execute the computer program stored in the memory, and implementing the following steps when executing the computer program: when a data message sent by a server is acquired, a target message parameter is acquired, the target message parameter being a message parameter used for determining whether the server is in a main/standby election completion state; whether the server is in a main/standby election completion state is determined according to the target message parameter and the data message; and when it is determined that the server is not in the main/standby election completion state, constituent network elements of a multi-chassis link aggregation group is controlled not to perform main/standby switching.

In some embodiments, the target message parameter(s) comprises media access control, MAC address information, and the MAC address information comprises a first MAC address and a second MAC address of the server. When determining, according to the target message parameter(s) and the data message, whether the server is in a main/standby election completion state, the processor 301 is configured to: determine, when the MAC address carried in the data message is the first MAC address, that the server is not in the main/standby election completion state; and determine, when the MAC address carried in the data message is the second MAC address, that the server is in the main/standby election completion state.

In some embodiments, the target message parameter(s) comprises virtual local area network, VLAN tag information, and the VLAN tag information comprises a first VLAN tag and a second VLAN tag. When determining, according to the target message parameter(s) and the data message, whether the server is in a main/standby election completion state, the processor 301 is configured to: determine, when the VLAN tag carried in the data message is the first VLAN tag, that the server is not in the main/standby election completion state; and determine, when the VLAN tag carried in the data message is the second VLAN tag, that the server is in the main/standby election completion state.

In some embodiments, the target message parameter(s) comprises message priority field information, and the message priority field information comprises a first message priority field and a second message priority field. When determining, according to the target message parameter(s) and the data message, whether the server is in a main/standby election completion state, the processor 301 is configured to: determine, when an access control list, ACL, rule corresponding to the first message priority field matches the data message, that the server is not in the main/standby election completion state; and determine, when an ACL rule corresponding to the second message priority field matches the data message, that the server is in the main/standby election completion state.

In some embodiments, before acquiring the target message parameter when the data message sent by the server in the Bond1 mode is acquired, the processor 301 is further configured to: acquire a message parameter configuration instruction, the message parameter configuration instruction comprising MAC address information, VLAN tag information and/or message priority field information; and configure the MAC address information, the VLAN tag information and/or the message priority field information as the target message parameter.

In some embodiments, after configuring the MAC address information, the VLAN tag information and/or the message priority field information as the target message parameter, the processor 301 is further configured to:
configure the VLAN tag information for each member port in the multi-chassis link aggregation group, and/or configure an ACL rule corresponding to the message priority field information for each member port in the multi-chassis link aggregation group.

It should be noted that a person skilled in the art would have been able to clearly understand that, to make the description convenient and brief, for a specific working process of the network element switching apparatus described above, reference can be made to the corresponding process in the embodiments of the network element switching method above, and they will not be repeated herein.

Embodiments of the present disclosure further provide a multi-chassis link aggregation group. The multi-chassis link aggregation group comprises a plurality of constituent network elements and a plurality of member ports. Each constituent network element comprises a network element switching apparatus as shown in Fig. 6. It should be noted that a person skilled in the art would have been able to clearly understand that, to make the description convenient and brief, for a specific working process of the multi-chassis link aggregation group described above, reference can be made to the corresponding process in the embodiments of the network element switching method above, and they will not be repeated herein.

Embodiments of the present disclosure further provide a storage medium for computer-readable storage. The storage medium stores one or more programs which can be executed by one or more processors to implement any network element switching method provided in the description of the present disclosure.

The storage medium may be an internal storage unit of the network element switching apparatus described in the embodiments above, for example, a hard disk or a memory of the network element switching apparatus. The storage medium may also be an external storage device of the network element switching apparatus, for example, a plug-in hard disk, a smart media card, SMC, a secure digital, SD card, a flash card, and the like that are equipped on the network element switching apparatus.

A person of ordinary skill in the art would understand that all or some of the steps of the methods disclosed above, and functional modules/units in systems and apparatuses can be implemented as software, firmware, hardware and any suitable combination thereof. In hardware embodiments, the division between functional modules/units referred to in the description above does not necessarily correspond to the division of physical components. For example, one physical component may have multiple functions, or one function or step may be cooperatively executed by several physical components. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may comprise a computer storage medium (or a non-transitory medium) and a communication medium (or a transitory medium). As is well known to a person of ordinary skill in the art, the term of computer storage medium comprises transitory and non-transitory, removable and non-removable media implemented in any method or technology for storage of information (such as computer-readable instructions, data structures, program modules, or other data). The computer storage medium comprises, but is not limited to, RAM, ROM, EEPROM, flash memory or other memory technology, CD-ROM, digital versatile disk, DVD, or other optical disk storage, magnetic cassette, magnetic tape, magnetic disk storage or other magnetic storage apparatuses, or any other medium that can be used to store desired information and can be accessed by a computer. In addition, it is well known to a person of ordinary skill in the art that the communication medium typically comprises computer-readable instructions, data structures, program modules, or other data in a modulated data signal such as a carrier or other transport mechanisms, and may comprise any information delivery medium.

It should be understood that the term "and/or" used in the description and the appended claims of the present disclosure refers to, and comprises, any and all possible combinations of one or more of the associated items listed. It should be noted that in the present text, the terms "comprise", "comprising", or any other variations thereof are intended to cover a non-exclusive inclusion, so that a process, a method, an article, or a system that comprises a series of elements not only comprises those elements, but further comprises other elements that are not explicitly listed, or further comprises inherent elements of the process, the method, the article, or the system. Without further limitation, an element defined by a sentence "comprising a ..." does not exclude other same elements existing in the process, the method, the article, or the system that comprises the element.

The serial numbers in the embodiments of the present disclosure are only for description, and do not represent the preference of the embodiments. The content above only relates to specific embodiments of the present disclosure, and the scope of protection of the present disclosure is not limited thereto. Any equivalent modification or replacement would have been readily conceivable to a person skilled in the art within the technical scope disclosed in the present disclosure, and these modifications or replacements shall fall within the scope of protection of the present disclosure. Therefore, the scope of protection of the present disclosure shall be subject to the scope of protection of the claims.

## Claims

1. A network element switching method, comprising:
acquiring, when a data message sent by a server is acquired, target message parameters, wherein the target message parameters are message parameters used for determining whether the server is in a main/standby election completion state;
determining, according to the target message parameters and the data message, whether the server is in a main/standby election completion state; and
controlling, when it is determined that the server is not in the main/standby election completion state, constituent network elements of a multi-chassis link aggregation group not to perform main/standby switching.

2. The network element switching method according to claim 1, wherein the target message parameters comprises media access control, MAC address information, and the MAC address information comprises a first MAC address and a second MAC address of the server; and determining, according to the target message parameters and the data message, whether the server is in a main/standby election completion state comprises:
determining, when the MAC address carried in the data message is the first MAC address, that the server is not in the main/standby election completion state; and
determining, when the MAC address carried in the data message is the second MAC address, that the server is in the main/standby election completion state.

3. The network element switching method according to claim 1, wherein the target message parameters comprise virtual local area network, VLAN tag information, and the VLAN tag information comprises a first VLAN tag and a second VLAN tag; and determining, according to the target message parameters and the data message, whether the server is in a main/standby election completion state comprises:
determining, when the VLAN tag carried in the data message is the first VLAN tag, that the server is not in the main/standby election completion state; and
determining, when the VLAN tag carried in the data message is the second VLAN tag, that the server is in the main/standby election completion state.

4. The network element switching method according to claim 1, wherein the target message parameters comprise message priority field information, and the message priority field information comprises a first message priority field and a second message priority field; and determining, according to the target message parameters and the data message, whether the server is in a main/standby election completion state comprises:
determining, when an access control list, ACL rule corresponding to the first message priority field matches the data message, that the server is not in the main/standby election completion state; and
determining, when an ACL rule corresponding to the second message priority field matches the data message, that the server is in the main/standby election completion state.

5. The network element switching method according to claim 1, wherein after determining, according to the target message parameters and the data message, whether the server is in a main/standby election completion state, the method further comprises:
controlling, when it is determined that the server is in the main/standby election completion state and a network element that acquires the data message is a standby network element, the multi-chassis link aggregation group to perform main/standby switching; and
controlling, when it is determined that the server is in the main/standby election completion state and the network element that acquires the data message is a main network element, the multi-chassis link aggregation group not to perform main/standby switching.

6. The network element switching method according to any one of claims 1-5, wherein before acquiring, when a data message sent by a server is acquired, target message parameters, the method further comprises:
acquiring a message parameter configuration instruction, wherein the message parameter configuration instruction comprises MAC address information, VLAN tag information and/or message priority field information; and
configuring the MAC address information, the VLAN tag information and/or the message priority field information as the target message parameters.

7. The network element switching method according to claim 6, wherein after configuring the MAC address information, the VLAN tag information and/or the message priority field information as the target message parameters, the method further comprises:
configuring the VLAN tag information for each member port in the multi-chassis link aggregation group, and/or configuring an ACL rule corresponding to the message priority field information for each member port in the multi-chassis link aggregation group.

8. A network element switching apparatus, the network element switching apparatus comprising a processor, a memory, a computer program stored on the memory and executable by the processor, and a data bus for implementing connection and communication between the processor and the memory, wherein the computer program, when executed by the processor, implements the network element switching method according to any one of claims 1 to 7.

9. A multi-chassis link aggregation group, the multi-chassis link aggregation group comprising a plurality of constituent network elements and a plurality of member ports, and each of the constituent network elements comprising the network element switching apparatus according to claim 8.

10. A storage medium for computer-readable storage, the storage medium storing one or more programs which can be executed by one or more processors to implement the network element switching method according to any one of claims 1 to 7.
